# EUROPEAN PATENT APPLICATION

(11) **EP 4 722 654 A1**
(43) Date of publication of application: **08.04.2026**
(21) Application number: 24204593.8
(22) Date of filing: 04.10.2024
(51) Int. Cl.: G01C 21/34

(54) **COMPUTER-IMPLEMENTED METHOD AND APPARATUS FOR GENERATING NAVIGATION INSTRUCTIONS**

(71) Applicant: TomTom Navigation B.V., 1011 AC Amsterdam (NL)
(72) Inventor: FISCHER, Johannes Robert, 1011 AC Amsterdam (NL); BAZHIN, Dmitry, 1011 AC Amsterdam (NL)
(74) Representative: Bardehle Pagenberg Partnerschaft mbB Patentanwälte Rechtsanwälte

(57) **Abstract**

In aspects of the present disclosure, a computer-implemented method for generating navigation instructions is provided. The method comprises: computing an in-drive alternative route based on a location of a navigation device and on a main route, wherein the in-drive alternative route differs partially from the main route; generating an indication for the in-drive alternative route based on the location of the navigation device on the main route; receiving an input by a user of the navigation device associated with the indication of the in-drive alternative route; based on the input by the user of the navigation device, generating navigation instructions for guiding the user of the navigation device via the in-drive alternative route and back to the main route; and communicating the generated navigation instructions to the user through the navigation device.

## Description

### Field

The present disclosure is in the field of generating navigation instructions for a driver of a vehicle. Particularly, the present disclosure provides improved methods for computing a suitable route for a user.

### Background

From the prior art, navigation devices are known which allow a user to input a desired destination. These devices then compute a route from a current location of the device to the destination. After the route has been created, the device then usually generates navigation instructions, guiding the user along the route towards the desired destination. Such navigation devices commonly have knowledge of their location on a map, e.g., by using Global Positioning System (GPS) or similar positioning techniques. They use this knowledge to output to the user the next one or the next few instructions, which the user should follow in order to remain on the computed route to the desired destination.

Some known navigation systems are capable of adapting to changes along the route, for example, if a user does not follow a navigation instruction, a navigation device acquires a new position, which is not on the computed route, and may thus re-compute the route based on the new position, such that the user will still reach the desired destination despite leaving the computed route.

The present disclosure aims at providing improved computation of routes and route alternatives.

### Summary

In aspects of the present disclosure, a computer-implemented method for generating navigation instructions is provided. The computer-implemented method comprises computing an in-drive alternative route based on a location of a navigation device and on a main route, wherein the in-drive alternative route differs partially from the main route. The computer-implemented method further comprises generating an indication for the in-drive alternative route based on the location of the navigation device on the main route. The computer-implemented method further comprises receiving an input by a user of the navigation device associated with the indication of the in-drive alternative route. The computer-implemented method further comprises, based on the input by the user of the navigation device, generating navigation instructions for guiding the user of the navigation device via the in-drive alternative route and back to the main route. The computer-implemented method further comprises communicating the generated navigation instructions to the user through the navigation device.

In some aspects of the present disclosure, the main route may define a connection between a starting point and a destination point.

It may be desirable for a navigation device to provide for route alternatives proactively, i.e., a navigation device may, in addition to driving instructions along the computed main route, generate one or more additional, alternative driving instructions, informing the user that the desired destination could also be reached via a different route. For example, a navigation device may output to the user that, to follow the main route, a right turn at an intersection may be necessary to follow the main route, but may at the same time output to the user, that if a left turn is made, the desired destination may also be reached via an alternative route.

This may be helpful as a user may notice during the drive that a modification of the route could be beneficial. For example, if a user reaches an intersection, where the navigation device outputs an instruction to make a right turn, the user may learn on the spot about a traffic obstruction in the street he or she is supposed to turn into, such as a construction, a traffic jam, a road accident, a garbage truck slowing down traffic, or the like. Then, the user may decide to follow an alternative instruction of the navigation device, to avoid the obstruction and still reach the desired destination via an alternative route. The information about, e.g., traffic obstruction or other hindrance on the main route may be visible and/or received via one or more other channels such as media, messages, as well as via the navigation device. If the navigation device has obtained the information on a traffic obstruction or hindrance along the main route and/or an in-drive alternative route prior to reaching a certain waypoint, such as an intersection, the navigation device may take this information into account when computing an in-drive alternative route and/or generating navigation instructions for guiding the user of the navigation device via the in-drive alternative route. For instance, in the foregoing example, if the navigation device has obtained information that a right turn at the intersection leads to a street where, e.g., a larger construction is ongoing or an accident has occurred, the computing of the in-drive alternative route may result in ignoring this particular in-drive alternative route or at least correspondingly marking a generated navigation instruction that is output to the user.

Generally, although following the alternative navigation instruction, the user may not wish to be guided to a completely different route. For example, on a large scale there may be multiple different routes to go to a certain place, as for example different motorways, or combinations of motorways, or other streets within a long-distance traffic network. If the main route is now computed along one certain path, e.g., along one particular motorway of the long-distance traffic network, the user may not wish that the decision to go along an alternative route will lead to switching of the navigation process to an entirely different main route, e.g., to an entirely different motorway than was originally planned.

Thus, the in-drive alternative route may comprise only a minor local alternative which allows a user to avoid a certain traffic obstruction along a street segment, but still be guided back onto the main route, e.g., the motorway he or she originally planned to take to reach the desired destination.

For example, a user may wish to avoid a certain street segment, e.g., due to a traffic obstruction, but still want to take the motorway he or she was planning to use to get to the destination, in the long run. Therefore, it may be desirable to generate navigation instructions for guiding the user back to the main route via the in-drive alternative route.

This allows for improved user experience, as well as improved computation efficiency, because only a minor in-drive alternative/s (e.g., a minor detour) may be computed, while for the rest of the route, the already computed main route can still be used.

In some aspects of the present disclosure, the input by the user of the navigation device may comprise one of a manual selection by the user of the navigation device; voice input by the user of the navigation device; and driving along the in-drive alternative route by the user of the navigation device.

That is, a navigation device may display that there is an in-drive alternative route, and the user may either manually select the in-drive alternative route, or issue a voice command, or just drive along an alternative driving instruction associated with the alternative road. The latter option may sometimes be referred to as "decide by steering".

These options provide for a simple and intuitive way of selecting the in-drive alternative route by the user.

In some aspects of the present disclosure, generating the indication of the in-drive alternative route may comprise displaying a change of an estimated time of arrival associated with the in-drive alternative route. Displaying this change of arrival time allows the user to make an informed choice whether or not to select the in-drive alternative route. In one embodiment, the estimated time of arrival for either or both the original route and the in-drive route alternative may depend on a current road situation, such as traffic, road conditions, etc.

In some aspects of the present disclosure, computing the in-drive alternative route may comprise optimizing the in-drive alternative route by minimizing a cost value associated with the in-drive alternative route. The cost value may be based at least in part on one or more of the following: an estimated time of arrival at the destination, a length of the in-drive alternative route, a traffic situation of the in-drive alternative route, current road or road segment/s condition, and preferred navigation characteristics by the user of the navigation device.

The estimated time of arrival may correspond to the estimated time a user will arrive at his or her destination, if he drives along certain road segments. The algorithm may be desired to minimize the estimated time of arrival.

The length of the in-drive alternative may correspond to the distance passed before returning to the main route. The algorithm may additionally or alternatively be desired to minimize the length of the in-drive alternative.

A "traffic situation of the in-drive alternative route" may comprise a current traffic situation, e.g., a traffic jam which currently occurs, and/or a likelihood of an occurrence of a traffic jam at a certain road segment. That is, if a segment either currently has a traffic jam, or is likely to have a traffic jam, the segment may be assigned a higher cost value than a segment which currently does not have a traffic jam, or is generally unlikely to have traffic jams. The likelihood of a traffic jam may be time-dependent, as for example, some segments may frequently have traffic jams at certain times of day, e.g., during rush hour, or during certain times of week or year, e.g., on weekends or during the holidays. Thus, the algorithm may, additionally or alternatively be desired to avoid road segments currently having traffic jams or road segments which have a high likelihood of traffic jams.

"Preferred navigation characteristics" may correspond to navigation preferences by the user. For example, a user may prefer to drive along country roads rather than highways or may prefer driving through side roads rather than main roads. Such preferences can either be expressly received by the user, e.g., by inputting them into the navigation device, or may be inferential, e.g., the device may learn from past driving behavior of the user about his or her navigation preferences. The algorithm may be desired to take account of the user's expressed or inferred preferences and prefer road segments that agree with the preferences over road segments that do not agree with the preferences. That is, a higher cost value may be assigned to road segments that do not agree with the user preferences.

In some aspects of the present disclosure, computing the in-drive alternative route may further comprise penalizing routing options, wherein penalizing routing options comprises modifying cost values associated with the routing options with corresponding, e.g., estimated or predefined, weighing factor/s.

This may avoid the algorithm to guide the user along an alternative main route if the in-drive alternative road is accepted. For example, if a first highway and a second highway possibly lead the user to his or her destination, and the main route goes along the first highway, routing options along the second highway may be penalized. The penalization may include all routing options along the second highway, or a subset thereof. In particular, the penalization may include routing options along a first stretch of the second highway. Avoiding that the user is guided through the alternative main route provides for an improved user experience and increased computation efficiency. In one embodiment a part, (e.g., a first stretch) of the first highway may be penalized for calculating an in-drive alternative to the main route to avoid the penalized portion, with or even without penalizations on the secondary highway. Thus, the alternative route would snatch back to the initial main route (e.g., via the first highway) afterwards in an efficient way. This approach may not hinder distant route alternative calculations based on the same data and aimed to avoid the initial main route to yield an alternative main route (e.g., through the secondary highway).

In some aspects of the present disclosure, the in-drive alternative route may be associated with one or more waypoints of the main route, and generating the indication of the in-drive alternative route may be in response to approaching a waypoint of the one or more waypoints.

For example, the in-drive alternative route may start at one or more waypoints of the main route. Such a way point may sometimes be referred to as a "fork point", i.e., a point, where a user can decide whether to remain on the main route or to take the in-drive alternative route. Sometimes, an in-drive alternative route may have multiple possible starting points, and may thus be associated with more than one waypoint. Displaying the indication in response to approaching the waypoint allows for a clear and overseeable way to display the in-drive alternative routes which are currently relevant, i.e., which are in the closer vicinity of the user.

In some aspects of the present disclosure, computing the in-drive alternative route may be further in response to a changed road characteristic on at least one road segment of the main route, wherein the road characteristic includes one or more of traffic volume, traffic speed, road surface condition, visibility, and road closure.

In some aspects of the present disclosure, computing the in-drive alternative route may be in response to approaching the waypoint of the one or more waypoints, or/and in response to approaching a waypoint or an element of the route of a particular type (e.g., intersection). While other implementations are possible, where the in-drive alternative is computed up-front, computing the in-drive alternative route in response to approaching the waypoint may preserve computational power, as no unnecessary in-drive alternative routes must be computed. A preferred way of guiding a user to a destination may be a mix of upfront calculations and showing of possible main routes (main route, alternative main routes) towards the destination, while the in-drive alternatives are computed and/or output to the user approaching a certain waypoint, e.g., as local alternatives.

Computing the in-drive-alternatives up front, e.g., prior to or upon starting the navigation, may have other advantages. For example, a data connection may be more stable at the beginning of the navigation, because the device may be within reach of a wireless local area network (WLAN) or a mobile communications network and may thus access data required for computing the in-drive alternative route, such as real-time traffic data, from a server, such that more suitable in-drive alternative routes may be computed.

In some aspects of the present disclosure, the computer-implemented method may further comprise discarding the in-drive alternative route in response to passing a waypoint or a threshold number of waypoints associated with the in-drive alternative route. Preferably, the threshold number of waypoints may correspond to at least two waypoints.

In a case where an in-drive alternative route has more than one starting points, a user may be prompted to decide whether or not to use the in-drive alternative at each of those waypoints. Such scenarios may for example apply if the user drives along one road, and the in-drive alternative route corresponds to a parallel road, such that there may be multiple intersections which the user may use to reach the parallel road and thus the in-drive alternative road. In this case, it may be desirable to define a threshold number of waypoints, after which the in-drive alternative route may be disregarded. For example, if a user has not decided to use a certain in-drive alternative route multiple times, it becomes less likely that he or she will be interested in using the in-drive alternative route at a later point in time. Therefore, user experience may be improved, if the in-drive alternative route is disregarded after a threshold number of waypoints. Furthermore, memory usage of a navigation device may be optimized, because no "unneeded" in-drive alternative routes would be kept within the memory for too long.

In some aspects of the present disclosure, the main route may comprise (e.g. span over):
(i) at least one first urban and/or suburban area, and the in-drive alternative route may be located within the first urban and/or suburban area; and
(ii) at least one second urban and/or suburban area and/or a long-distance transport network, and the in-drive alternative route may not be located within the at least one second urban and/or second suburban area and/or long-distance transport network.

Urban and suburban areas may have comparably dense street networks, such that many alternative ways may be possible to reach a same destination, e.g., a certain highway of a long-distance transport network. Such areas are often subject to transient traffic events, such as quick emerging and subsiding of minor traffic jams, short-term roadblocking, e.g., by a garbage truck, a vehicle parking shortly on a road making a delivery, or the like. Therefore, it may be impossible to anticipate or account for such traffic obstructions well in advance. Therefore, it is desirable to proactively suggest small in-drive alternative routes within such areas having dense street networks, such that a user can spontaneously react to an emerging traffic obstruction by taking the in-drive alternative road, without losing track of the originally planned main route.

In some aspects of the present disclosure, generating the indication of the in-drive alternative route may comprise outputting, to the user of the navigation device, the indication of the in-drive alternative route.

In some aspects of the present disclosure, generating the navigation instructions may comprise outputting, to the user of the navigation device, the navigation instructions.

In one implementation of the present disclosure, an apparatus for generating navigation instructions is provided. The apparatus comprises: means for computing an in-drive alternative route based on a location of a navigation device and on a main route, wherein the in-drive alternative route differs partially from the main route; means for generating, an indication for the in-drive alternative route based on a location of the navigation device on the main route; means for receiving an input by a user of the navigation device associated with the indication of the in-drive alternative route; means for generating, based on the input by the user of the navigation device, navigation instructions for guiding the user of the navigation device via the in-drive alternative route and back to the main route; and means for communicating the generated navigation instructions to the user through the navigation device.

In one implementation of the present disclosure, an apparatus for generating navigation instructions is provided. The apparatus may comprise a memory and one or more processors coupled to the memory. The one or more processors may be configured to: compute an in-drive alternative route based on a location of a navigation device and on a main route, wherein the in-drive alternative route differs partially from the main route; generate an indication for the in-drive alternative route based on the location of the navigation device on the main route; receive an input by a user of the navigation device associated with the indication of the in-drive alternative route; generate, based on the input by the user of the navigation device, navigation instructions for guiding the user of the navigation device via the in-drive alternative route and back to the main route; and communicate the generated navigation instructions to the user through the navigation device.

In one implementation of the present disclosure, a vehicle comprising an apparatus as described above.

### Brief description of the drawings

Fig. 1 illustrates a map with a main route and several exemplary in-drive alternatives, in accordance with aspects of the present disclosure.
Fig. 2 illustrates a schematic of a main route with two in-drive alternative routes, in accordance with aspects of the present disclosure.
Fig. 3 illustrates a schematic of a scenario having two main routes and several exemplary in-drive alternative routes, in accordance with aspects of the present disclosure.
Fig. 4 illustrates an exemplary indication of an in-drive alternative route, in accordance with aspects of the present disclosure.
Fig. 5 illustrates a schematic of an in-drive alternative associated with multiple waypoints in accordance with aspects of the present disclosure.
Fig. 6 illustrates a flow-chart of a computer-implemented method in accordance with aspects of the present disclosure.
Fig. 7 illustrates a navigation apparatus in accordance with aspects of the present disclosure.
Fig. 8 illustrates a schematic of a vehicle in accordance with aspects of the present disclosure.

### Detailed description

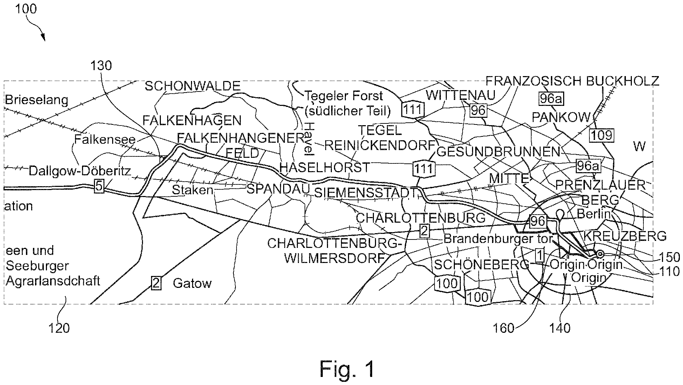

**Fig. 1** illustrates a map with a main route and several exemplary in-drive alternatives, in accordance with aspects of the present disclosure.

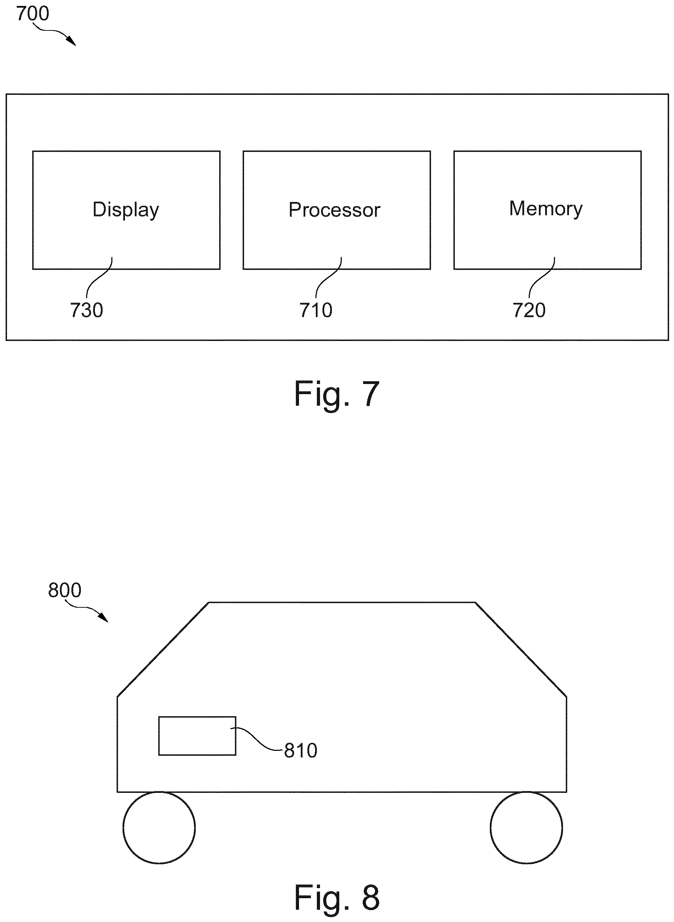

According to Fig. 1, a map 100 may be provided. The map 100 may be displayed on a display of a navigation device, for example, on a navigation device as described with reference to Fig. 7. On the map 100, a main route 130 can be seen. The main route 130 defines a connection between a starting point 110 and a destination point 120. For example, a user of a navigation device may currently be located at the starting point 110 and may desire to go to the destination point 120. The user thus may have entered the desired destination point 120 into the navigation device. The navigation device may then have generated the main route 130 as a possible connection between the starting point 110 and the destination point 120. In some examples, the navigation device may compute the main route autonomously. However, in other examples, the navigation device may have a connection to a server, e.g., a navigation server, and may forward the starting point 110 and destination point 120 to the server, and may receive one or more potential main routes in return.

In some aspects, the main route 130 may have been selected by a user from a plurality of main routes. In some aspects, the main route 130 may be a default main route and may be selected by a device based on one or more parameters, such as user preferences, estimated time of arrival, a current traffic situation, length of the main route, expected fuel consumption along the main route, or the like.

As can be seen from Fig. 1, the road network is denser in the proximity of the starting point 110, i.e., approximately within the area 140. Thus, it may be beneficial to provide one or more in-drive alternative routes 150, 160. For example, the in-drive alternative routes 150, 160 may constitute different ways of reaching a road of the long-distance transport network (e.g., a highway), along which the main route proceeds.

Thus, there may be many possible ways of getting to the main route via in-drive alternatives, including one or more alternatives at or around the starting point 110 (which are also understood as "in-drive alternatives" that go "back to the main route" for the purpose of the present disclosure). It may be beneficial to provide the user with one or more option during driving or before starting driving. If the user has a certain preference for how to start the drive, or comes across a spontaneous traffic obstruction during driving (e.g., traffic jam, garbage truck, parking vehicle blocking a certain road segment, etc.), the user has immediate access to an alternative option allowing him or her to avoid the spontaneous traffic obstruction and still reach the main route.

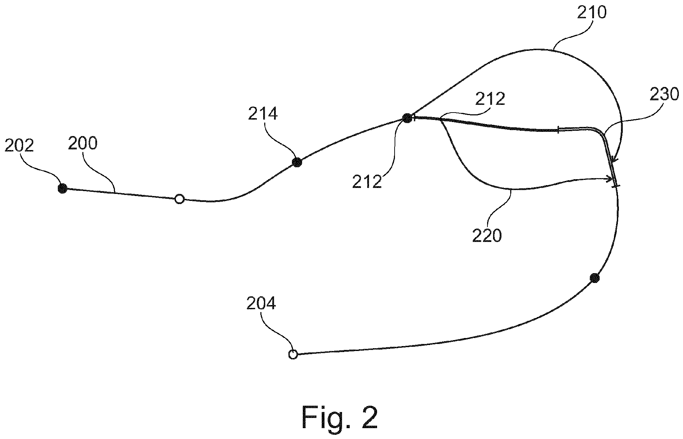

**Fig. 2** illustrates a schematic of a main route with two in-drive alternative routes, in accordance with aspects of the present disclosure.

According to Fig. 2, a main route 200 may have been computed and outputted to the user, e.g., via the navigation device. For example, the main route 200 may be a schematic of the main route 130 depicted in Fig. 1. For example, the main route 200 may start at a starting point 202 and end at a destination point 204, such that the starting point 202 and the destination point 204 are connected by the main route 200.

Moreover, one or more in-drive alternative routes may be computed, such as a first in-drive alternative route 210 and a second in-drive alternative route 220. The first in-drive alternative route 210 may be associated with a first waypoint 212. For example, the first in-drive alternative route may start at waypoint 212.

Similarly, the second in-drive alternative route 220 may be associated with a second waypoint 222. For example, the second in-drive alternative route 220 may start at waypoint 222.

Both, the first in-drive alternative route 210 and the second in-drive alternative route 220 may differ, at least partially from the main route 200.

In some examples, the first in-drive alternative route 210 and/or the second in-drive alternative route 220 may be computed in response to approaching the first waypoint 212 and the second waypoint 222, respectively. For example, the computation of the first in-drive alternative route 210 and the second in-drive alternative route 220 may be triggered by the user passing a third waypoint 214, which is at a predefined distance from the first waypoint 212 and the second waypoint 222, respectively.

In other examples, the in-drive alternative routes may be computed upfront, such that data associated with the first or second in-drive alternative route may be acquired from a memory of a navigation device or from a server in response to approaching a waypoint, or in response to passing a third waypoint 214 at a predefined distance from the first waypoint 212 and second waypoint 222, respectively.

Computing the first or second in-drive alternative route may comprise optimizing the in-drive alternative route by minimizing a cost value associated with the in-drive alternative route. The cost value may be based at least in part on one or more of the following:
- an estimated time of arrival at the destination,
- a length of the in-drive alternative route,
- a traffic situation of the in-drive alternative route, and
- preferred navigation characteristics by the user of the navigation device.

For example, an algorithm may be used for assigning a cost value with each road segment of the respective in-drive alternative route, according to one or more of the above-defined quantities. The algorithm may then compute different options for the respective in-drive alternative route in an effort to minimize the respective cost value.

In some examples, the algorithm may penalize routing options which are associated with an alternative main route. Penalizing routing options comprises associating cost values associated with the routing options with a predefined weighing factor. That is, if an alternative main route to the main route 200 exists, for example, via an entirely different highway than the main route, the algorithm may penalize road segments associated with said alternative road, e.g., with the different highway. For example, the cost value of road segments associated with the alternative main route may be multiplied by a positive weighing factor greater than 1. Consequently, the switch to the alternative main route may be suppressed, such that a switch of the navigation from the main route 200 to an alternative main route is performed only if there is a very high improvement of the alternative main route compared to the main route 200.

The algorithm may further define a target zone 230 which may correspond to a part of the main route 200 within which the in-drive alternative route should return back to the main route 200. For example, the target zone 230 may be defined as one or more threshold distances (i.e. a maximum and/or a minimum distance) from the first waypoint 212. E.g., the target zone may be defined to be between 5 km and 10 km from the first waypoint 212. Alternatively, the target zone 230 may only have one threshold value, for example an upper threshold value. E.g., the target zone 230 may end at most 10 km from the first waypoint 212.

Defining a target zone may ensure the return to the main route 200 after the deviation from the main route 200 via the respective in-drive alternative route.

Once the algorithm determines a suitable minimum cost value, the respective in-drive alternative route may be considered as finished and respective navigation instructions associated with the in-drive alternative route may be generated. Moreover, an indication of the respective in-drive alternative route may be outputted to the user.

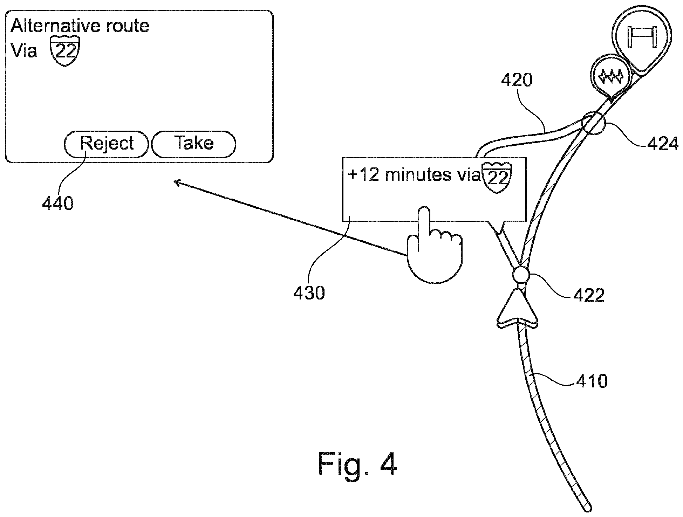

For example, an indication for the first and/or second in-drive alternative route may be generated based on a location of the navigation device on the main route. For example, the indication may be generated in response to passing the third waypoint 214 at a predefined distance to the first waypoint 212 and/or the second waypoint 222. For example, the indication may correspond to the indication of the in-drive alternative route described with reference to Figure 4.

If a user, for example in reaction to the indication, decides to use either the first in-drive alternative route 210 or the second in-drive alternative route 220, i.e., to partially deviate from the main route 200, navigation instructions may be generated for guiding the user back to the main route via the respective in-drive alternative route.

The user may utter his or her intention to use one of the in-drive alternative routes in the form of input. Such input may comprise, but is not limited to, a manual selection (e.g., by operating a mechanical button or a respective surface on a touch-sensitive surface of a screen or the like), by voice input (e.g., by uttering a voice command to a voice interface of the navigation device) or by driving along the in-drive alternative route (e.g., by proactively deviating from the main route at the first waypoint 212 or the second waypoint 222, respectively, and steering onto the respective in-drive alternative route).

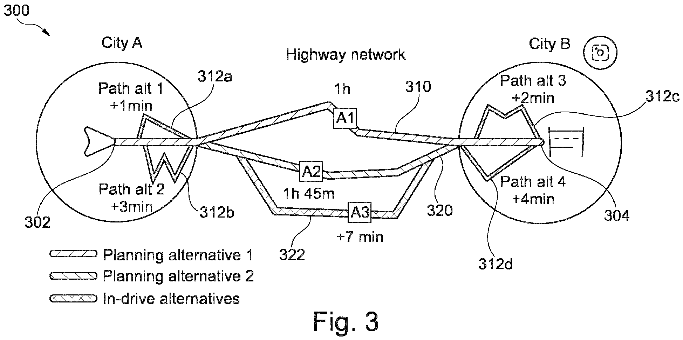

**Fig. 3** illustrates a schematic of a scenario having two main routes and several exemplary in-drive alternative routes, in accordance with aspects of the present disclosure.

According to Fig. 3 the user of the navigation device may be at a starting point 302 and desire to go to the destination point 304. The starting point 302 and destination point 304 may be connected by two or more alternative main routes. For simplicity, in Fig. 3 only two alternative main routes are shown. In some examples, the user may input the desired destination into the navigation device, for example by using a keyboard, a touch-sensitive surface or display of the navigation device, voice input or any other means of user input. In response to the input, the navigation device may generate multiple (e.g., at least two) alternative main roads, including a first main route 310 and a second main route 320, both of which may connect the starting point 302 and the destination point 304. The user may be prompted to select one of the first main route 310 and the second main route 320. The user may then select one of the generated main routes. For example, the user may select the first main route 310. The first main route 310 may correspond to the main route 130 of Fig. 1 or to the main route 200 of Fig. 2.

In-drive alternative routes may be computed up front, i.e., upon computing the main routes. That is, in-drive alternative routes 312a-312d, associated with the first main route 310 may be computer, as well as in-drive alternative route 322, which may be associated with the second main route 320.

Upon selecting the first main route 310, the second main route 320, as well as the in-drive alternative route 322 may be discarded.

Any main route (e.g., the first main route 310 and/or the second main route 320) may comprise a first part and a second part. The first part may be associated with an urban or suburban area (e.g., with City A and/or City B). Sometimes, the first part may be in close proximity of the starting point 302 and/or the destination point 304. The first part may comprise one or more contiguous or non-contiguous portions. For example, the first part may comprise a beginning of a route, i.e., a route portion from the starting point 302 towards a road of the long-distance transport network, e.g., highway A1, or an end of the route, i.e., a route portion from the road of the long-distance transport network to the destination point 204, or both. The second part of the route may be associated with a long-distance transport network (e.g., with the highway network, comprising highway A1, highway A2 and highway A3.

The in-drive alternative routes may be primarily located within the urban or suburban area, i.e., within City A and/or City B. However, in-drive alternative routes which are located within the long-distance transport network are also possible. For example, in-drive alternative route 322 may be associated with an alternative highway A3, as a detour from the highway A2, which is included in the second main route 320.

**Fig. 4** illustrates an exemplary indication of an in-drive alternative route, in accordance with aspects of the present disclosure.

According to Fig. 4 the user may drive along a main route 410. The main route 410 may correspond to the main route 130 of Fig. 1, the main route 200 of Fig. 2, or the first main route 310 or second main route 320 of Fig. 3.

In response to approaching a waypoint 422, an indication of in-drive alternative route 420 may be generated. The in-drive alternative route 420 may be associated with waypoints 422 and 424. For example, the in-drive alternative route may start at waypoint 422 and end at waypoint 424. The indication may comprise a graphical representation of the in-drive alternative route 420, e.g., a representation of the in-drive alternative route on a map displayed on the navigation device. Moreover, generating the indication of the in-drive alternative route may comprise displaying a change of an estimated time of arrival (ETA) associated with the in-drive alternative route. In the example shown in Fig. 4, the in-drive alternative route 420 is associated with a change of ETA of 12 minutes, i.e., if the user uses the in-drive alternative route, he or she may arrive at the destination 12 minutes later than had he or she used the main route 410. The change of ETA may be displayed in a display control unit 430 associated with the in-drive alternative route 420.

Additionally, further information associated with the in-drive alternative route 420 may be displayed in the display control unit 430. For instance, the navigation device may display further information regarding the in-drive alternative 420, as for example the avoidance of a toll road, a traffic jam, a road accident, or similar.

The display control unit 430 may be selectable by a user, for example by operating a mechanical button or engaging with a touch sensitive display surface. Upon selecting the display control unit 430, further information 440 may be shown. The further information 440 may comprise a total length of the in-drive alternative route 420, a total remaining travel time associated with using the in-drive alternative route 420, an estimated predicted battery charging level (e.g., if the vehicle is an electrical vehicle) of the vehicle when arriving at the destination point or an estimated predicted petrol filling level when arriving at the destination point.

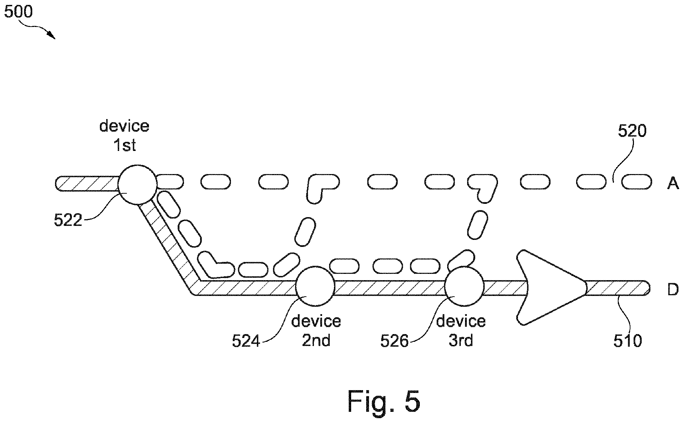

**Fig. 5** illustrates a schematic of an in-drive alternative associated with multiple waypoints in accordance with aspects of the present disclosure.

According to Fig. 5, a main route 510 may be provided, as well as an in-drive alternative route 520.

The main route 510 may correspond to the main route 130 of Fig. 1, the main route 200 of Fig. 2, the first main route 310 or the second main route 320 of Fig. 3, or to the main route 410 of Fig. 4.

The in-drive alternative route 520 may be associated with multiple waypoints 522, 524 and 536 of the main route 510. For example, there may be multiple starting points for the in-drive alternative route 520.

A user may receive the indication from the navigation device (e.g., the indication described with respect to Fig. 4) in response to approaching any of the waypoints 522, 524, 526.

However, in response to passing a threshold number of waypoints, the respective in-drive alternative route may be discarded. In some aspects, the threshold number of waypoints may correspond to at least two waypoints. For example, after the user has passed waypoint 522, waypoint 524 and waypoint 526, it may be interpreted that the user is not interested in using the respective in-drive alternative route 520. Thus, the in-drive alternative route 520 may be discarded after the user has passed waypoint 526 without deciding to use the in-drive alternative route 520.

This may improve user experience and also save memory resources of the navigation device.

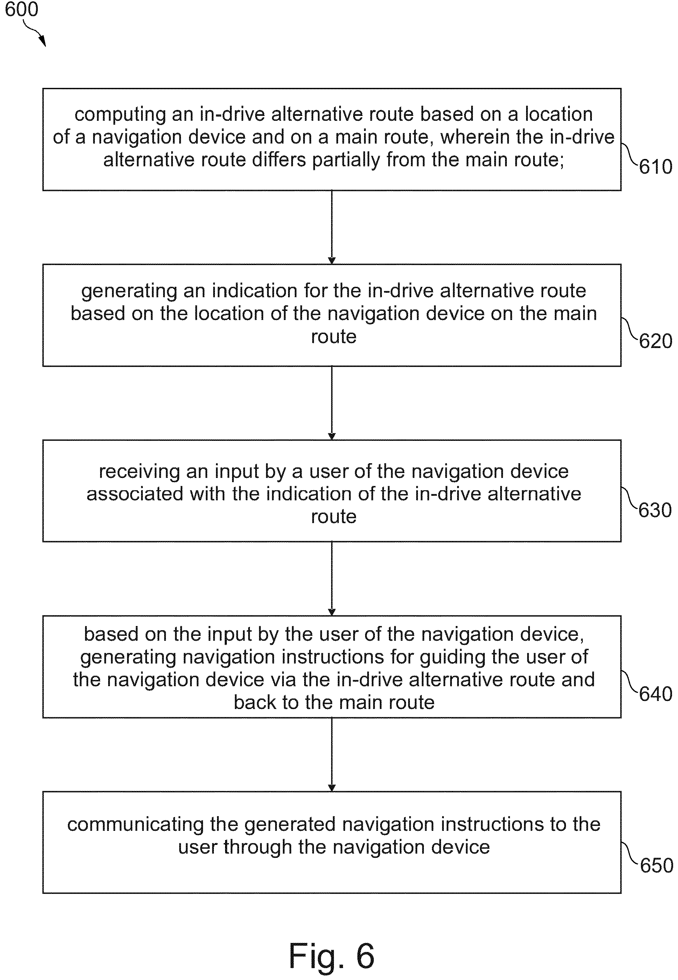

**Fig. 6** illustrates a flow-chart of a computer-implemented method 600 in accordance with aspects of the present disclosure.

According to Fig. 6, the computer-implemented method 600 may comprise computing an in-drive alternative route based on a location of a navigation device and on a main route, wherein the in-drive alternative route differs partially from the main route (block 610).

In some aspects, the main route may define a connection between a starting point and a destination point.

In some aspects, computing the in-drive alternative route may comprise optimizing the in-drive alternative route by minimizing a cost value associated with the in-drive alternative route. The cost value may be based at least in part on one or more of the following:
- an estimated time of arrival at the destination,
- a length of the in-drive alternative route,
- a traffic situation of the in-drive alternative route, and
- preferred navigation characteristics by the user of the navigation device.

In some aspects, computing the in-drive alternative route may further comprise penalizing routing options which are associated with an alternative main route. Penalizing routing options may comprise associating cost values associated with the routing options with a predefined weighing factor.

In some aspects, the in-drive alternative route may be associated with one or more waypoints of the main route, and generating the indication of the in-drive alternative route may be in response to approaching a waypoint of the one or more waypoints.

In some aspects, computing the in-drive alternative route may be in response to approaching the waypoint of the one or more waypoints.

In some aspects, the computer-implemented method 600 may further comprise discarding the in-drive alternative route in response to passing a threshold number of waypoints of the one or more waypoints associated with the in-drive alternative route. The threshold number of waypoints may correspond to at least two waypoints.

In some aspects, the main route may comprise (e.g., span over):
(i) at least one first urban and/or suburban area, and the in-drive alternative route is located within the first urban and/or suburban area; and
(ii) at least one second urban and/or second suburban area and/or a long-distance transport network, and the in-drive alternative route is not located within the at least one second urban and/or second suburban area and/or long-distance transport network.

The computer-implemented method 600 may further comprise generating an indication for the in-drive alternative route based on the location of the navigation device on the main route (block 620).

In some aspects, generating the indication of the in-drive alternative route may comprise displaying a change of an estimated time of arrival associated with the in-drive alternative route.

In some aspects, generating the indication of the in-drive alternative route may comprise outputting, to the user of the navigation device, the indication of the in-drive alternative route. The outputting may be performed by displaying the indication on a display of the navigation device, by audio output, or any other means of notifying the user of the in-drive alternative route.

The computer-implemented method may further comprise receiving an input by a user of the navigation device associated with the indication of the in-drive alternative route (block 630).

In some aspects, the input by the user of the navigation device may comprise one or more of:
- a manual selection by the user of the navigation device;
- voice input by the user of the navigation device; and
- driving along the in-drive alternative route by the user of the navigation device.

The computer-implemented method may further comprise, based on the input by the user of the navigation device, generating navigation instructions for guiding the user of the navigation device via the in-drive alternative route and back to the main route (block 640).

In some aspects, generating the navigation instructions may comprise outputting, to the user of the navigation device, the navigation instructions. The outputting may be performed by displaying the indication on a display of the navigation device, by audio output, or any other means of notifying the user of the navigation instructions.

The computer-implemented method may further comprise communicating the generated navigation instructions to the user through the navigation device (block 650).

**Fig. 7** illustrates a navigation apparatus 700 in accordance with aspects of the present disclosure.

According to Fig. 7, the apparatus may comprise a processor 710 and a memory 720 coupled to the processor 710. The apparatus may further comprise a display 730 for outputting information to a user.

The processor 710 may be configured to compute an in-drive alternative route based on a location of a navigation device and on a main route, wherein the in-drive alternative route differs partially from the main route. Thus, the apparatus 700 may comprise a means for computing an in-drive alternative route based on a location of a navigation device and on a main route, wherein the in-drive alternative route differs partially from the main route.

The processor 710 may be further configured to generate an indication for the in-drive alternative route based on the location of the navigation device on the main route. Thus, the apparatus 700 may comprise at least one means for generating an indication for the in-drive alternative route based on the location of the navigation device on the main route.

The processor 710 may be further configured to receive an input by a user of the navigation device associated with the indication of the in-drive alternative route. Thus, the apparatus 700 may comprise at least one means for receiving an input by a user of the navigation device associated with the indication of the in-drive alternative route.

The processor 710 may be further configured to generate, based on the input by the user of the navigation device, navigation instructions for guiding the user of the navigation device via the in-drive alternative route and back to the main route. Thus, the apparatus 700 may comprise at least one means for generating, based on the input by the user of the navigation device, navigation instructions for guiding the user of the navigation device via the in-drive alternative route and back to the main route.

The processor 710 may be further configured to communicate the generated navigation instructions to the user through the navigation device. Thus, the apparatus 700 may comprise at least one means for communicating the generated navigation instructions to the user through the navigation device.

Moreover, the processor 710 may be configured to implement any method described herein, particularly any method described herein with reference to Fig. 6. Thus, the apparatus 700 may comprise at least one means for implementing any method described herein, particularly any method described herein with reference to Fig. 6.

**Fig. 8** illustrates a schematic of a vehicle 800 in accordance with aspects of the present disclosure.

According to Fig. 8, the vehicle 800 may comprise an apparatus 810, which may correspond to the apparatus 700 described herein with reference to Fig. 7. The apparatus 810 may comprise at least one means for performing any method described herein, particularly for performing any method described herein with reference to Fig. 6. The apparatus may comprise a memory and one or more processors coupled to the memory, the processor being configured to perform any method described herein, particularly to perform any method described herein with reference to Fig. 6.

## Claims

1. A computer-implemented method for generating navigation instructions, the method comprising:
computing an in-drive alternative route based on a location of a navigation device and on a main route, wherein the in-drive alternative route differs partially from the main route;
generating an indication for the in-drive alternative route based on the location of the navigation device on the main route;
receiving an input by a user of the navigation device associated with the indication of the in-drive alternative route;
based on the input by the user of the navigation device, generating navigation instructions for guiding the user of the navigation device via the in-drive alternative route and back to the main route; and
communicating the generated navigation instructions to the user through the navigation device.

2. The computer-implemented method of claim 1, wherein the main route defines a connection between a starting point and a destination point.

3. The computer-implemented method of any one of the preceding claims, wherein the input by the user of the navigation device comprises one of:
a manual selection by the user of the navigation device;
voice input by the user of the navigation device; and
driving along the in-drive alternative route by the user of the navigation device.

4. The computer-implemented method of any one of the preceding claims, wherein generating the indication of the in-drive alternative route comprises displaying a change of an estimated time of arrival associated with the in-drive alternative route.

5. The computer-implemented method of any one of the preceding claims, wherein computing the in-drive alternative route comprises:
optimizing the in-drive alternative route by minimizing a cost value associated with the in-drive alternative route, wherein the cost value is based at least in part on one or more of the following:
an estimated time of arrival at the destination,
a length of the in-drive alternative route,
a traffic situation of the in-drive alternative route, and
preferred navigation characteristics by the user of the navigation device.

6. The computer-implemented method of any one of the preceding claims, wherein computing the in-drive alternative route further comprises penalizing one or more routing options, wherein penalizing routing options comprises modifying one or more cost values associated with the one or more routing options with one or more predefined weighing factors.

7. The computer-implemented method of any one of the preceding claims, wherein the in-drive alternative route is associated with one or more waypoints of the main route, and
generating the indication of the in-drive alternative route is in response to approaching a waypoint of the one or more waypoints.

8. The method of claim 7, wherein computing the in-drive alternative route is in response to approaching the waypoint of the one or more waypoints.

9. The method of claim 8, wherein computing the in-drive alternative route is further in response to a changed road characteristic on at least one road segment of the main route, wherein the road characteristic includes one or more of traffic volume, traffic speed, road surface condition, visibility, and road closure.

10. The computer-implemented method of any one of claims 7 to 9, further comprising:
discarding the in-drive alternative route in response to passing a threshold number of waypoints of the one or more waypoints associated with the in-drive alternative route.

11. The computer-implemented method of claim 10, wherein the threshold number of waypoints corresponds to at least two waypoints.

12. The computer-implemented method of any one of the preceding claims, wherein the main route comprises:
(i) at least one first urban and/or suburban area, and the in-drive alternative route is located within the first urban and/or suburban area; and
(ii) at least one second urban and/or second suburban area and/or a long-distance transport network, and the in-drive alternative route is not located within the at least one second urban and/or second suburban area and/or long-distance transport network.

13. The computer-implemented method of any one of the preceding claims, wherein:
generating the indication of the in-drive alternative route comprises outputting, to the user of the navigation device, the indication of the in-drive alternative route; and
generating the navigation instructions comprises outputting, to the user of the navigation device, the navigation instructions.

14. An apparatus for generating navigation instructions, the apparatus comprising:
means for computing an in-drive alternative route based on a location of a navigation device and on a main route, wherein the in-drive alternative route differs partially from the main route;
means for generating, an indication for the in-drive alternative route based on a location of the navigation device on the main route;
means for receiving an input by a user of the navigation device associated with the indication of the in-drive alternative route;
means for generating, based on the input by the user of the navigation device, navigation instructions for guiding the user of the navigation device via the in-drive alternative route and back to the main route; and
means for communicating the generated navigation instructions to the user through the navigation device.

15. A vehicle comprising the apparatus of claim 14.
